# EUROPEAN PATENT APPLICATION

(11) **EP 4 379 906 A1**
(43) Date of publication of application: **05.06.2024**
(21) Application number: 22905778.1
(22) Date of filing: 23.05.2022
(51) Int. Cl.: H01M 10/613, H01M 10/627, H01M 10/6568

(54) **ENERGY STORAGE BATTERY SYSTEM**

(30) Priority: 13.12.2021 CN 202123136324 U
(71) Applicant: Sungrow Power Supply Co., Ltd., Hefei, Anhui 230088 (CN)
(72) Inventor: GAO, Yuan, Hefei, Anhui 230088 (CN); ZHOU, Jianjie, Hefei, Anhui 230088 (CN); CAO, Wei, Hefei, Anhui 230088 (CN)
(74) Representative: Rooney, John-Paul
(86) International application number: PCT/CN2022/094452
(87) International publication number: WO 2023/109010

(57) **Abstract**

Disclosed is an energy storage battery system, comprising: a liquid cooling unit, the liquid cooling unit having a coolant outlet and a coolant inlet; a supporting structure, the supporting structure being at least partially open, and the supporting structure internally having a first coolant channel and a second coolant channel, an inlet of the first coolant channel being communicated with the coolant outlet of the liquid cooling unit, an outlet of the second coolant channel being communicated with the coolant inlet of the liquid cooling unit; a plurality of battery modules assembled on the supporting structure, each battery module internally having a heat exchanger, a coolant inlet of the heat exchanger being communicated with an outlet of the first coolant channel, a coolant outlet of the heat exchanger being communicated with an inlet of the second coolant channel. With the structural design of the energy storage battery system, flexible changes can be made to the quantity and positions of battery modules.

## Description

The present application claims priority to Chinese Patent Application No. 202123136324.2, titled "ENERGY STORAGE BATTERY SYSTEM", filed on December 13, 2021 with the China National Intellectual Property Administration, which is incorporated herein by reference in its entirety.

### FIELD

The present application relates to the technical field of energy storage, and in particular to a battery energy storage system.

### BACKGROUND

The method for heat dissipation of battery energy storage system is developed from air cooling by air conditioning to liquid cooling, where the heat in the battery is carried away by the coolant in the liquid cooling pipeline, which has a high efficiency of thermal management.

In the prior art, most battery energy storage systems employ a box-type structure, with components like battery clusters arranged in enclosures such as containers and outdoor cabinets. The enclosure requires a high ingress protection rating of at least IP54 to prevent leakage, therefore has a fixed capacity and is sealed, which is not convenient for flexible deployment on a project site. Besides, the high protection rating of the enclosure and the battery leads to a complicated manufacturing process and high cost, and may impede the cooling and explosion protection of the battery after thermal runaway.

### SUMMARY

In view of this, an object of the present application is to provide a battery energy storage system, which has the structural design where the number and position of battery modules can be changed flexibly, and is adaptive for flexible deployment on a project site.

For achieving the object, the present application provides the following technical solutions.

A battery energy storage system includes:
a liquid cooling unit having a coolant outlet and a coolant inlet;
a support structure that is open at least partially open, a first coolant channel and a second coolant channel are provided inside the support structure, an inlet of the first coolant channel is in communication with the coolant outlet of the liquid cooling unit, and an outlet of the second coolant channel is in communication with the coolant inlet of the liquid cooling unit; and
a plurality of battery modules mounted on the support structure, where each of the battery modules is provided with a heat exchanger inside; a coolant inlet of the heat exchanger is in communication with an outlet of the first coolant channel, and a coolant outlet of the heat exchanger is in communication with an inlet of the second coolant channel; and a coolant from the liquid cooling unit flows through the first coolant channel, the heat exchangers of the battery modules, and the second coolant channel in sequence, then flows back to the liquid cooling unit.

Preferably, in the battery energy storage system, the support structure includes a support frame, and the support frame includes multiple support beams.

Preferably, in the battery energy storage system, the support structure includes a support platform, and the support platform is a ground platform or a metal platform.

Preferably, in the battery energy storage system, the outlet of the first coolant channel is in communication with the coolant inlet of the heat exchanger through a detachable adapter, and the coolant outlet of the heat exchanger is in communication with the inlet of the second coolant channel through another detachable adapter.

Preferably, the battery energy storage system further includes any one or more of a battery management module and a power conversion unit fixed on the support structure, where a housing of the battery management module and a housing of the power conversion unit are dustproof and waterproof.

Preferably, in the battery energy storage system, the liquid cooling unit is fixed on the support structure.

Preferably, the battery energy storage system includes at least one battery cluster, where the battery cluster includes a plurality of battery modules arranged in a stacked manner.

Preferably, in the battery energy storage system, the number of the support structure is plural, and the plurality of support structures are fixed on the ground platform one after another, where
the liquid cooling unit is fixed in at least one of the support structures; the battery cluster and the battery management module located at a bottom or a top of the battery cluster is fixed in at least another one of the support structures; and the power conversion unit is fixed in at least yet another one of the support structures.

Preferably, in the battery energy storage system, the number of the support structure is plural, where the liquid cooling unit is in communication with the first coolant channels and the second coolant channels of the support structures.

Preferably, in the battery energy storage system, the number of the support structure is plural, where the battery energy storage system further includes a firefighting unit, which includes multiple fire extinguishing pipelines provided in parallel and multiple detection and alarm modules provided in parallel, where the multiple fire extinguishing pipelines provide extinguishing media to the battery clusters in the multiple support structures, respectively; and the multiple detection and alarm modules detect whether the battery clusters in the multiple support structures are on fire and raise an alarm once the fire starts, respectively.

Preferably, in the battery energy storage system, a vacuum chamber or a thermal insulation layer is provided inside a housing of the battery module.

Preferably, in the battery energy storage system, a pressure relief port is provided in the housing of the battery module, where a pressure limiting valve is arranged at the pressure relief port.

According to the battery energy storage system of the present application, the support structure is provided with the first coolant channel and the second coolant channel inside, and the liquid cooling unit is in communication with the heat exchangers of the battery modules through the first coolant channel and the second coolant channel, so that the coolant from the liquid cooling unit flows through the first coolant channel, the heat exchangers of the battery modules, and the second coolant channel in sequence, then flows back to the liquid cooling unit, to dissipate the heat in the batteries.

It is known from above that, since the first coolant channel and the second coolant channel are both pre-manufactured inside the support structure, and the support structure is at least partially open, i.e. the support structure is provided with a fitting hole, through which the battery module can get in and out of the support structure, so that the number and the positions of the battery modules can be adjusted through the fitting hole in the support structure, to be adapted to on-site projects, which is beneficial to flexible deployment on the project site.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the structure of a battery energy storage system according to an embodiment of the present application;
FIG. 2 is a schematic view showing the structure of a support frame in FIG. 1;
FIG. 3 is a schematic view of a battery cluster in FIG. 1;
FIG. 4 is a schematic view showing the structure of the battery cluster;
FIG. 5 is a schematic view showing the structure of a battery energy storage system according to another embodiment;
FIG. 6 is a schematic view showing the structure of the battery energy storage system in FIG. 5;
FIG. 7 is a schematic view of a battery energy storage system according to yet another embodiment;
FIG. 8 is a schematic view of a battery energy storage system according to still another embodiment;
FIG. 9 is a schematic view of a battery energy storage system according to still yet another embodiment;
FIG. 10 is a schematic view of a battery energy storage system according to still yet another embodiment; and

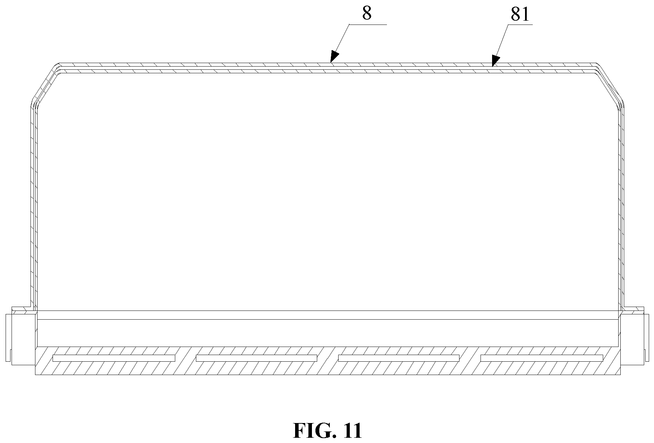

FIG. 11 is a sectional view of a housing of a battery module according to the present application.

### Reference numerals:

| | | | |
|---|---|---|---|
| 1 | support frame, | 11 | first coolant channel, |
| 12 | second coolant channel, | 2 | liquid cooling unit, |
| 3 | battery module, | 4 | power conversion unit, |
| 5 | battery management module, | 6 | ground platform, |
| 7 | firefighting unit, | 8 | housing of battery module, |
| 81 | vacuum chamber. | | |

### DETAILED DESCRIPTION OF THE EMBODIMENTS

The object of the present application is to provide a battery energy storage system, the number and position of battery modules of which can be changed flexibly, and therefore is adaptive for flexible deployment on a project site.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

In the description of the present application, it should be understood that the orientation or positional relationship indicated by the terms "upper", "lower", "front", "back", "left", "right", etc. are based on those shown in the accompanying drawings, and are merely for the convenience of describing the present application and the simplification of the description, and do not indicate or imply that the device or element referred to must have a particular orientation, or be configured and operated in a particular orientation, which therefore should not be construed as a limitation to the scope of the present application. In addition, terms such as "first", "second" and the like are merely for description, and should not be construed as indicating or implying relative importance.

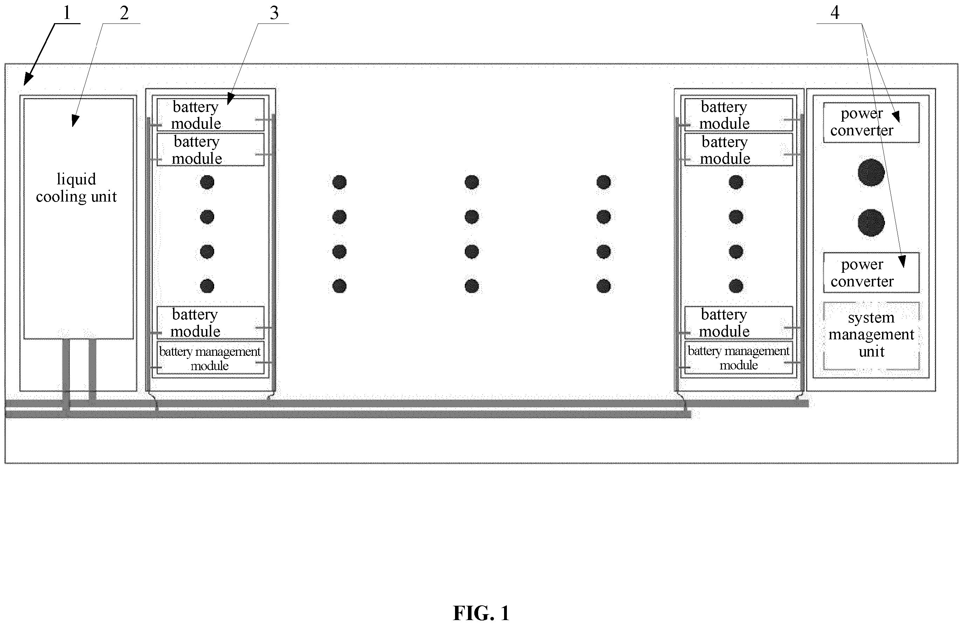

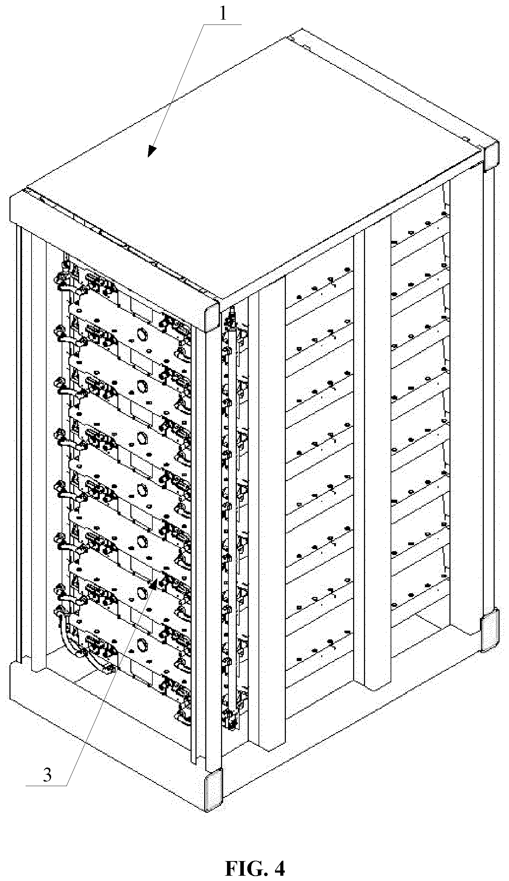

With reference to FIG. 1 to FIG. 10, a battery energy storage system according to the present application includes a liquid cooling unit 2, a support structure and multiple battery modules 3.

The liquid cooling unit 2 includes a coolant outlet and a coolant inlet, where a coolant flows into the liquid cooling unit 2 through the coolant inlet. The liquid cooling unit 2 performs refrigeration to the coolant, to reduce the temperature of the coolant entered into the liquid cooling unit 2, and the coolant after refrigeration is discharged through the coolant outlet of the liquid cooling unit 2.

The support structure is at least partially open, i.e. the support structure is provided with a fitting hole, through which the battery module can get in and out of the support structure. A first coolant channel 11 and a second coolant channel 12 are provided inside the support structure, i.e. the first coolant channel 11 and the second coolant channel 12 are pre-manufactured inside the support structure, with only an inlet of the first coolant channel 11 and an outlet of the second coolant channel 12 being exposed on the surface of the support structure. The inlet of the first coolant channel 11 is in communication with the coolant outlet of the liquid cooling unit 2, and the outlet of the second coolant channel 12 is in communication with the coolant inlet of the liquid cooling unit 2.

The multiple battery modules 3 are mounted on the support structure. Specifically, the multiple battery modules 3 are fixed on the support structure. The support structure may include a support beam, and the battery modules 3 are fixedly connected to the support beam.

Each of the battery modules 3 is provided with a heat exchanger thereinside, where a coolant inlet of the heat exchanger is in communication with the outlet of the first coolant channel 11, and a coolant outlet of the heat exchanger is in communication with the inlet of the second coolant channel 12. The coolant from the liquid cooling unit 2 flows through the first coolant channel 11, the heat exchangers of the battery modules 3, and the second coolant channel 12 in sequence, then flows back to the liquid cooling unit 2. The coolant carries the heat inside the battery modules 3 away when flowing through the heat exchangers of the battery modules 3, to cool the batteries. The heat exchangers of the multiple battery modules 3 may be in parallel or in series, or, the heat exchangers of a part of the battery modules 3 may be in series, and then be arranged in parallel with the heat exchangers of the other part of the battery modules 3.

A housing 8 of the battery module 3 is waterproof and dustproof, specifically with an ingress protection rating of at least IP54.

According to the battery energy storage system in the present application, the support structure is provided with the first coolant channel 11 and the second coolant channel 12 thereinside, through which the liquid cooling unit 2 is in communication with the heat exchangers of the battery modules 3, so that the coolant from the liquid cooling unit 2 flows through the first coolant channel 11, the heat exchangers of the battery modules 3, and the second coolant channel 12 in sequence, then flows back to the liquid cooling unit 2, to dissipate the heat in the batteries.

It is known from above that, since the first coolant channel 11 and the second coolant channel 12 are both pre-manufactured inside the support structure, and the support structure is at least partially open, i.e. the support structure is provided with the fitting hole, through which the battery module can get in and out of the support structure, the number and the positions of the battery modules may be adjusted through the fitting hole in the support structure, to be adapted to the on-site projects, which is beneficial to flexible deployment on the project site.

In a specific embodiment, the support structure may include a support frame 1. The support frame 1 includes multiple support beams, where the first coolant channel 11 and the second coolant channel 12 may be located inside the support beams, and the first coolant channel 11 and the second coolant channel 12 may extend along the support beams. Specifically, the support beams may include multiple transverse beams and multiple longitudinal beams. Of course, the structure of the support frame 1 may be designed based on actual conditions, which is not limited herein.

In another embodiment, the support structure includes a support platform, where the multiple battery modules 3 may be fixed on the support platform.

Further, the support platform may be a ground platform 6 or a metal platform. Of course, the support platform may also be made of other materials. The support platform may be provided with the support frame 1 thereon, to fix the multiple battery modules 3. Of course, the support frame 1 may include a baseplate, which is not limited herein.

The support structure may also be a warehouse, which is not limited herein.

To facilitate connection, the outlet of the first coolant channel 11 may be in communication with the coolant inlet of the heat exchanger through a detachable adapter; and the coolant outlet of the heat exchanger may be in communication with the inlet of the second coolant channel 12 through a detachable adapter, which facilitates the disassembly and assembly of the battery modules 3. Specifically, multiple adapters are reserved on the surface of the support structure. When mounting the battery modules 3, the heat exchangers of the battery modules 3 may be connected to the adapters nearby. The adapters may be sealed when not required.

In a specific embodiment, the battery energy storage system further includes any one or more of a battery management module 5 and a power conversion unit 4 fixed on the support structure. In this way, the battery management module 5, the power conversion unit 4 and the battery modules 3, which are independent to each other, may be integrated on one or more support structures, making the management and the transportation more convenient. The battery management module 5 is mainly for on-off control of the battery clusters, and for monitoring and managing the state of the battery clusters.

A housing 8 of a temperature control unit, a housing 8 of the battery management module 5 and a housing 8 of the power conversion unit 4 are waterproof and dustproof, with an ingress protection rating of at least IP54.

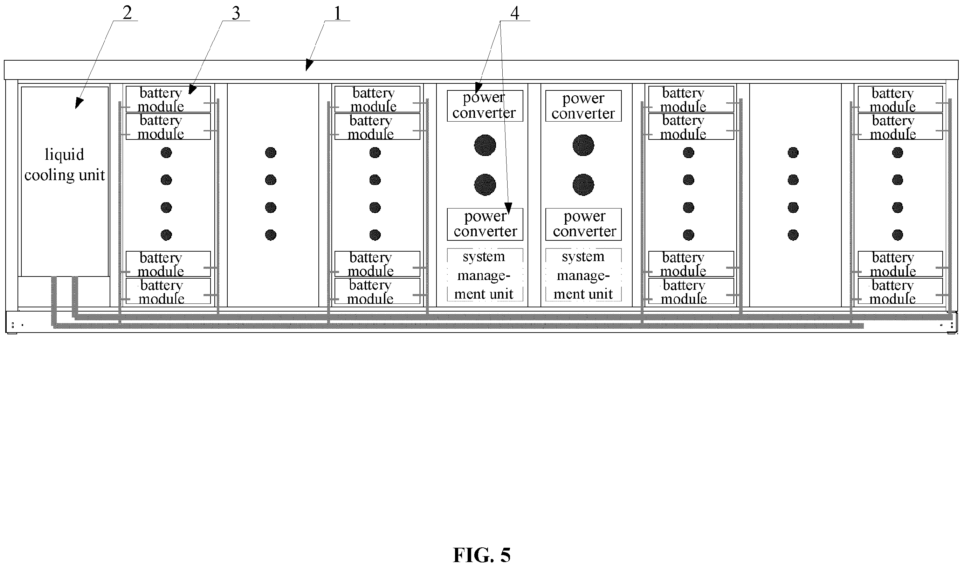

As shown in FIG.1 and FIG.5, the liquid cooling unit 2 may be fixed on the support structure. Of course, the liquid cooling unit 2 may not be fixed on the support structure, and the position of the liquid cooling unit 2 may be determined according to actual conditions.

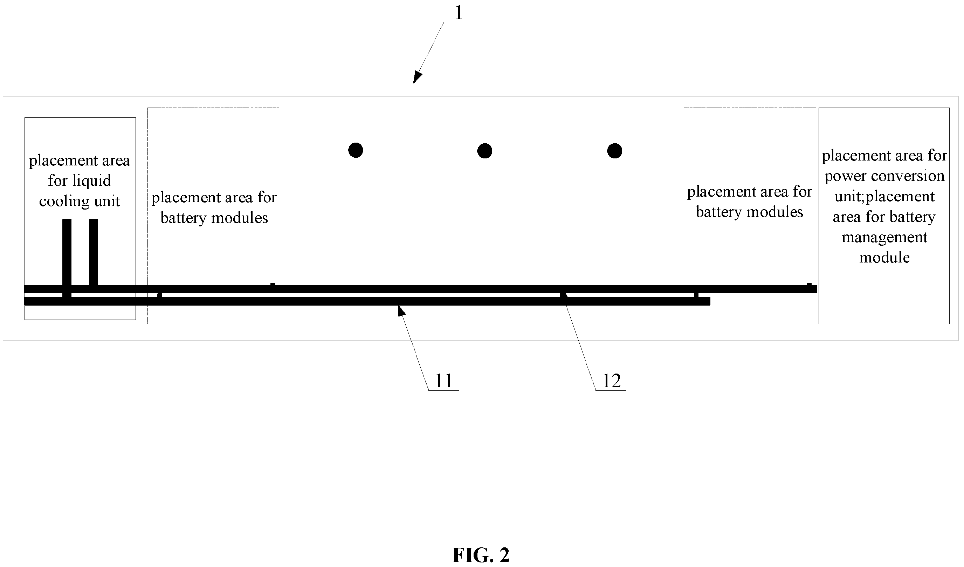

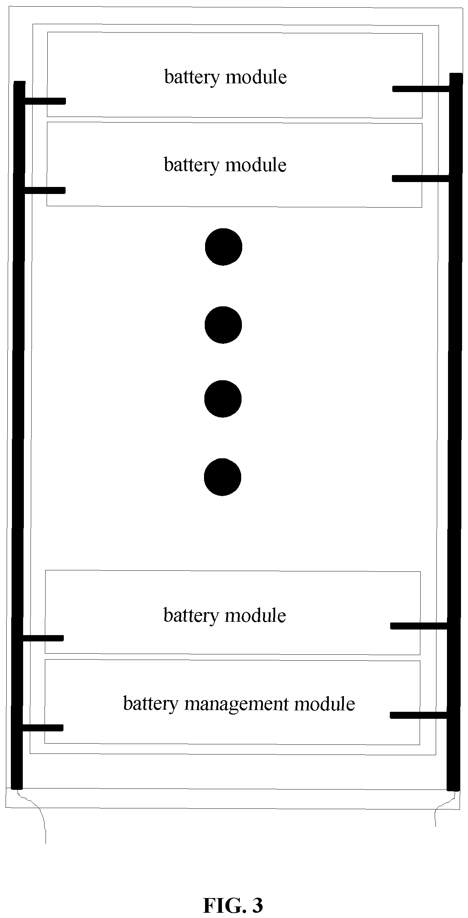

As shown in FIG.2 and FIG.3, the battery energy storage system may include at least one battery cluster, which includes multiple battery modules 3 arranged in a stacked manner. The multiple battery modules 3 arranged in the stacked manner may be in parallel connection. When multiple battery clusters are provided, the multiple battery clusters may be arranged one after another.

As shown in FIGs. 1 to 4, according to a first embodiment of the present application, the support frame 1 is provided with a placement area for the liquid cooling unit 2, a placement area for the power conversion unit 4, a placement area for the battery management module 5 and multiple placement areas for the battery modules 3. Specifically, the liquid cooling unit 2 is fixed at the placement area for the liquid cooling unit 2; the multiple battery clusters are fixed at the multiple placement areas for the battery modules, respectively; the power conversion unit 4 is fixed at the placement area for the power conversion unit 4; and the battery management module 5 is fixed at the placement area for the battery management module 5. The multiple battery clusters are arranged one after another, and the power conversion unit 4 is above the battery management module 5.

In the first embodiment, the battery management module may be arranged below the multiple stacked battery modules 3 in the battery cluster.

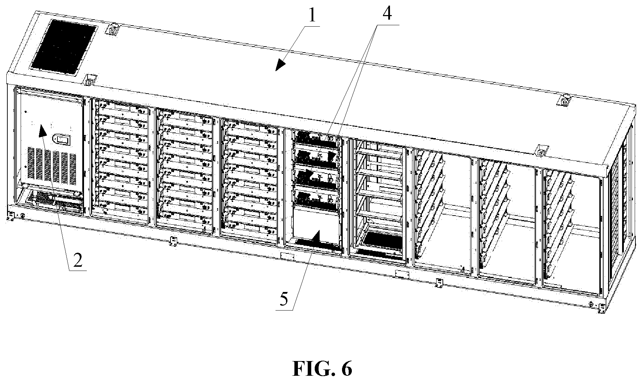

As shown in FIGs.5 and 6, according to a second embodiment of the present application, the support frame 1 is provided with a placement area for the liquid cooling unit 2, a placement area for the power conversion unit 4, a placement area for the battery management module 5 and multiple placement areas for the battery modules 3. Specifically, the liquid cooling unit 2 is fixed at the placement area for the liquid cooling unit 2; the multiple battery clusters are fixed at the multiple placement areas for the battery modules 3, respectively; the power conversion unit 4 is fixed at the placement area for the power conversion unit 4; and the battery management module 5 is fixed at the placement area for the battery management module 5. The power conversion unit 4 is above the battery management module 5, and the multiple battery clusters are arranged on both sides of the power conversion unit 4 and the battery management module 5.

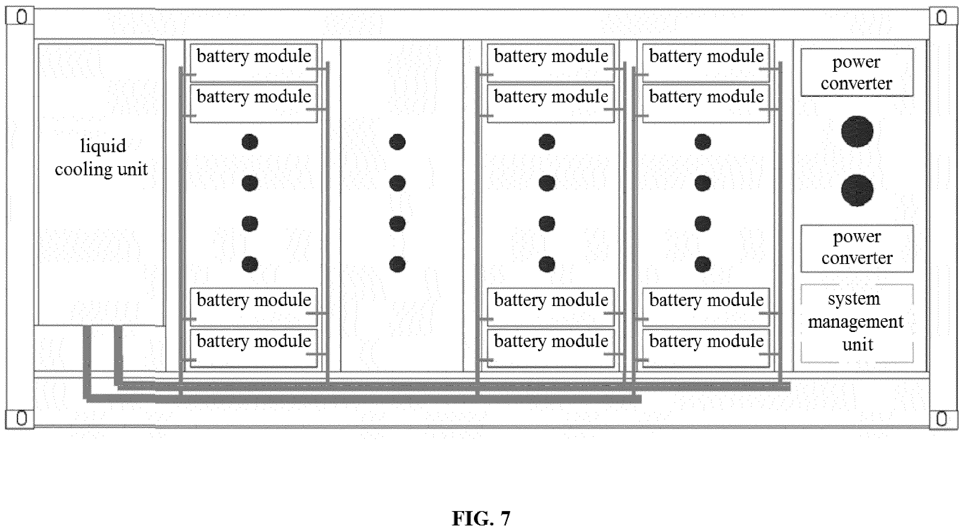

As shown in FIG. 7, according to a third embodiment of the present application, the power conversion unit 4 is above the battery management module 5, the liquid cooling unit 2 is located at one side of the support structure in a longitudinal direction thereof, the power conversion unit 4 and the battery management module 5 are located at the other side of the support structure in the longitudinal direction thereof, and the multiple battery clusters are arranged one after another between the liquid cooling unit 2 and the power conversion unit 4.

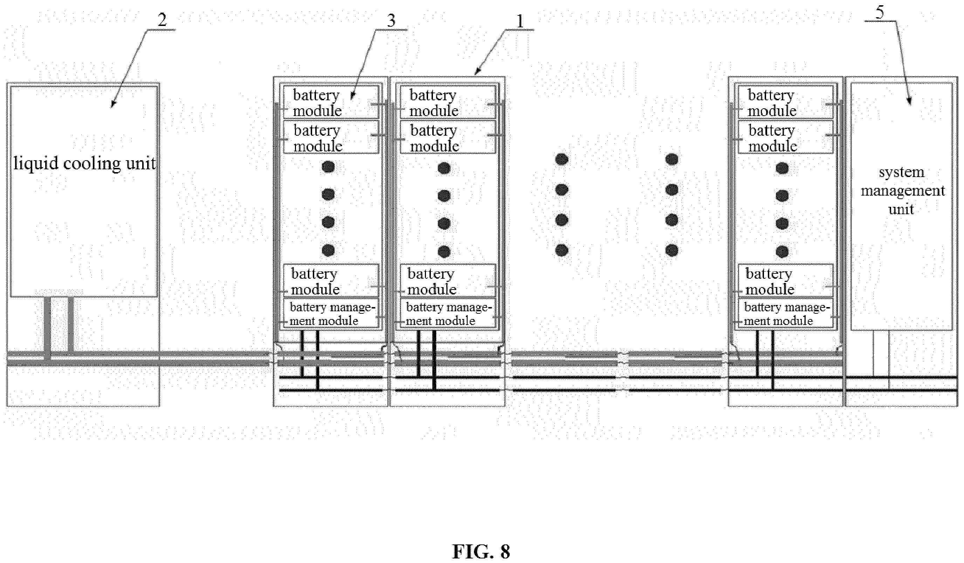

As shown in FIG. 8, in the third embodiment, the battery management module 5 may be arranged below the multiple stacked battery modules 3 in the battery cluster.

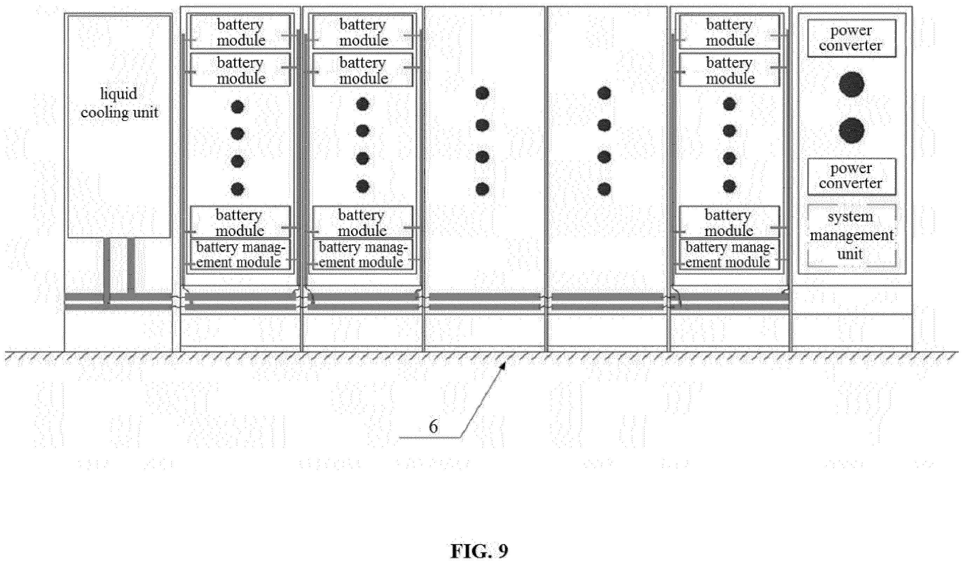

As shown in FIG. 9, according to a forth embodiment of the present application, the number of the support structure is plural, and the multiple support structures may be fixed on the ground platform 6 one after another, which makes it easy to assemble and more stable, where the liquid cooling unit 2 is fixed in at least one of the support structures; the battery cluster and the battery management module 5 on a top of or at a bottom of the battery cluster are fixed in at least another one of the support structures; and the power conversion unit 4 is fixed in at least yet another one of the support structures. By such arrangement, the liquid cooling unit 2 and the battery cluster which are independent from each other can be integrated.

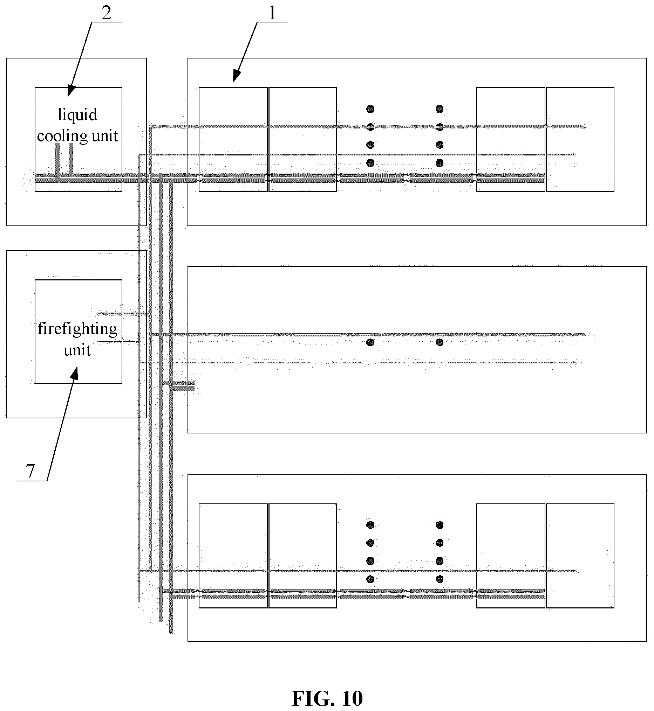

As shown in FIG. 10, the number of the support structure is plural, where the liquid cooling unit 2 is in communication with the first coolant channels 11 and the second coolant channels 12 of the multiple support structures. In this way, the liquid cooling unit 2 can supply coolant to the battery clusters fixed on the multiple support structures, so that the multiple battery clusters may share the liquid cooling unit 2, which reduces the cost and simplifies the structure.

The number of the support structure is plural. The battery energy storage system further includes a firefighting unit 7, which includes multiple fire extinguishing pipelines arranged in parallel and multiple detection and alarm modules arranged in parallel, where the multiple fire extinguishing pipelines are configured to provide extinguishing media to the battery clusters in the multiple support structures respectively. Specifically, when the battery cluster is on fire, the extinguishing media is supplied into the battery cluster to put out the fire. The multiple detection and alarm modules are configured to detect whether the battery clusters in the multiple support structures are on fire and raise an alarm once the fire starts, respectively. Specifically, the detection and alarm modules alert the workers upon detecting the fire in the battery cluster. By such arrangement, the multiple battery clusters share the firefighting unit 7, which reduces the cost and simplifies the structure.

The extinguishing media may be water, water mist, perfluoro, heptafluoropropane or aerosol, which is not limited herein.

To keep the internal temperature of the battery module 3, a vacuum chamber 81 or a thermal insulation layer may be provided inside the housing 8 of the battery module 3.

Additionally, to enhance the explosion-proof performance, a pressure relief port is provided in the housing 8 of the battery module 3, where a pressure limiting valve is arranged at the pressure relief port. When the pressure in the housing 8 of the battery module 3 reaches a preset value, the pressure may be relieved through the pressure limiting valve.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

In the description of this specification, descriptions referring to the terms "one embodiment", "example", "specific example", etc., mean that specific features, structures, materials or characteristics described in connection with the embodiment or example are included in at least one embodiment of the present application. In this specification, schematic expressions of the above terms do not necessarily refer to the same embodiment or example. Furthermore, the specific features, structures, materials or characteristics described may be combined in any suitable manner in any one or more embodiments or examples.

## Claims

1. A battery energy storage system, comprising:
a liquid cooling unit (2) having a coolant outlet and a coolant inlet;
a support structure, wherein the support structure is at least partially open, a first coolant channel (11) and a second coolant channel (12) are provided inside the support structure, an inlet of the first coolant channel (11) is in communication with the coolant outlet of the liquid cooling unit (2), and an outlet of the second coolant channel (12) is in communication with the coolant inlet of the liquid cooling unit (2); and
a plurality of battery modules (3) mounted on the support structure, wherein a heat exchanger is provided inside each of the plurality of battery modules (3), a coolant inlet of the heat exchanger is in communication with an outlet of the first coolant channel (11), and a coolant outlet of the heat exchanger is in communication with an inlet of the second coolant channel (12); and wherein a coolant from the liquid cooling unit (2) is configured to flow through the first coolant channel (11), the heat exchangers of the plurality of battery modules, and the second coolant channel (12) in sequence, and flow back to the liquid cooling unit (2).

2. The battery energy storage system according to claim 1, wherein the support structure comprises a support frame (1), and the support frame (1) comprises a plurality of support beams.

3. The battery energy storage system according to claim 1, wherein the support structure comprises a support platform, and the support platform is a ground platform (6) or a metal platform.

4. The battery energy storage system according to claim 1, wherein the outlet of the first coolant channel (11) is in communication with the coolant inlet of the heat exchanger through a detachable adapter, and the coolant outlet of the heat exchanger is in communication with the inlet of the second coolant channel (12) through another detachable adapter.

5. The battery energy storage system according to claim 1, further comprising any one or more of a battery management module (5) and a power conversion unit (4) fixed on the support structure, wherein a housing of the battery management module (5) and a housing of the power conversion unit (4) are dustproof and waterproof.

6. The battery energy storage system according to claim 1, wherein the liquid cooling unit (2) is fixed on the support structure.

7. The battery energy storage system according to claim 3, comprising at least one battery cluster, wherein the battery cluster includes a plurality of battery modules (3) arranged in a stacked manner.

8. The battery energy storage system according to claim 7, wherein the number of the support structure is plural, and the plurality of support structures are fixed on the ground platform one after another, wherein
the liquid cooling unit (2) is fixed in at least one of the plurality of support structures; the battery cluster and the battery management module located at a bottom or a top of the battery cluster are fixed in at least another one of the plurality of support structures; and the power conversion unit (4) is fixed in at least yet another one of the plurality of support structures.

9. The battery energy storage system according to claim 1, wherein the number of the support structure is plural, wherein the liquid cooling unit (2) is in communication with the first coolant channels (11) and the second coolant channels (12) of the plurality of the support structures.

10. The battery energy storage system according to claim 1, wherein the number of the support structure is plural, the battery energy storage system further comprises a firefighting unit (7), the firefighting unit (7) comprises a plurality of fire extinguishing pipelines provided in parallel and a plurality of detection and alarm modules provided in parallel; and wherein
the plurality of fire extinguishing pipelines are configured to provide extinguishing media to battery clusters in the plurality of the support structures, respectively; and the plurality of detection and alarm modules are configured to detect whether the battery clusters in the plurality of support structures are on fire and raise an alarm once the fire starts, respectively.

11. The battery energy storage system according to claim 1, wherein a vacuum chamber (81) or a thermal insulation layer is provided inside a housing (8) of the battery module (3).

12. The battery energy storage system according to claim 1, wherein a pressure relief port is provided in a housing (8) of the battery module (3), and a pressure limiting valve is arranged at the pressure relief port.
